# EUROPEAN PATENT APPLICATION

(11) **EP 1 936 231 A2**
(43) Date of publication of application: **25.06.2008**
(21) Application number: 07022361.5
(22) Date of filing: 19.11.2007
(51) Int. Cl.: F16F 15/02

(54) **Vibration management system**

(30) Priority: 20.12.2006 US 642112
(71) Applicant: CATERPILLAR INC., Peoria Illinois 61629-6490 (US)
(72) Inventor: Casey, Kent A., Preoria Illinois 61629-6490 (US); Raab, Frank J., Preoria Illinois 61629-6490 (US); Thomson, Norval P., Preoria Illinois 61629-6490 (US)
(74) Representative: Wagner, Karl H.

(57) **Abstract**

A vibration management system (20) for a machine (10) may receive a signal indicative of an amount of vibration experienced via one or more sensors or an amount of vibration to be expected based on data from a surveying system (26) which may be combination with data from a positioning system (28) and a speed monitoring system (27). The vibration management system (20) may add this data to a vibration history of a machine member 11 to predict the accumulative vibration the machine member 11 may be exposed to. This characteristic is compared to a desired characteristic and an adjusting action may be taken in response to a deviation as to have a second predicted characteristic approach the desired characteristic. A site management system (500) may use the deviation to allocate resources.

## Description

### Technical Field

The present disclosure relates to managing vibration exposure and, more particularly, to methods for managing vibrations experienced by a machine, a component of a machine or by an operator of a machine.

### Background

Machines, their components and their operators can experience significant levels of vibration. Many regulatory bodies have imposed restrictions on the vibration levels that an operator may be exposed to over time, i.e. accumulative vibration exposure. To comply with these restrictions, an operator's time on a particular machine can be limited. Specifically, the operator may be required to cease operation of the machine once he has experienced a certain vibration level for a predetermined period of time. Alternatively, an active vibration management system may be employed in an attempt to reduce the average vibration level experienced by the operator and, therefore, prolong his allowed time on the machine.

Various systems have been proposed for actively reducing vibrations in a machine. Many of these systems involve sensing of vibrations produced in the machine and reducing the vibrations transferred from a vibration source to the frame of the machine. For example, U.S. Patent No. 6,644,590 to Terpay et al. ("the '590 patent"), which issued on 11 November 2003, describes an active system and method for reducing vibrations generated by a gearbox in a rotary wing aircraft. In this system, an active mount is connected between the gearbox and the airframe using hydraulic actuators to suspend the airframe from the gearbox. Based on output signals from various vibration sensors, hydraulic fluid may be supplied to the actuators to move the gearbox relative to the airframe. This motion may be controlled to minimize the transfer of vibrations from the gearbox to the frame.

While the system of the '590 patent may help reduce the vibrations transferred to certain machine components, the system has several shortcomings. For example, the system of the '590 patent cannot monitor or track average vibration levels experienced by an operator or component. Further, the system includes no predictive capability for determining the vibration response of a system to various operator inputs. In addition, the system does not include the capability of adjusting the response of a machine component to reduce the amount of vibration produced. Therefore, the system of the '590 patent may be unsuitable as a means for ensuring that an operator of a machine does not experience a certain vibration level for greater than a permissible length of time. Furthermore, the system of the '590 patent cannot provide management of operations to achieve maximum productivity whilst preventing exposure of the operator to levels of vibration that are not acceptable. Reducing outputs or lowering machine travel speeds may reduce the vibration levels that the machine, its components or its operator is exposed to but is usually also detrimental to the productivity and efficiency of the machine and operator.

Vibration management may further lead to problems of resource management as operators may no longer be automatically expected to perform certain operations for the duration of a full working shift. The accumulative vibration exposure of the operator may exceed acceptable levels after only a part of the shift is completed or alternatively it may be predicted that the accumulative vibration exposure of the operator will exceed acceptable levels during the shift. This places a strain on resource management as operators may have to abandon a particular duty at any time during their working shift.

The present disclosure is aimed at overcoming one or more of the aforementioned disadvantages.

### Brief Description of the Drawings

Fig. 1 is a pictorial representation of a machine according to an exemplary disclosed embodiment.
Fig. 2 is a block diagram representation of a vibration management system according to an exemplary disclosed embodiment.
Fig. 3 is a block diagram representation of a vibration management control according to an exemplary disclosed embodiment.
Fig. 4 is a block diagram representation of a vibration management system according to another exemplary disclosed embodiment.
Fig. 5 is a flow chart illustrating the steps of an exemplary disclosed vibration management method.

### Detailed Description

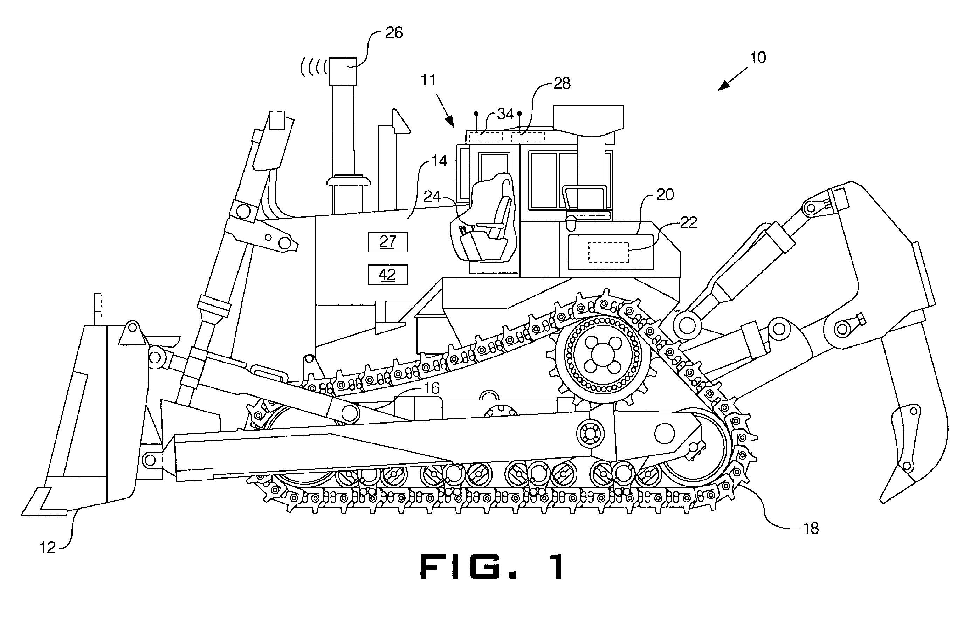

Fig. 1 provides a pictorial illustration of machine 10. While machine 10 is shown as a track type tractor, machine 10 may be any other suitable type of machine such as for example, a wheeled tractor, shovel/excavator, dump truck or a garbage collection truck.

Machine 10 may include a power source 14, a frame 16, and one or more traction devices 18. Power source 14 and traction device 18 may be operatively connected to the frame. Machine 10 may also include a vibration management system 20 including controller 22. Machine 10 may include an input device 24 that receives input commands from an operator.

While illustrated in Fig. 1 as a work implement (a blade for a track type tractor in this illustration), machine component 12 may constitute any component on or operatively connected to machine 10 that may be configured to respond to an operator's input commands through input device 24. For example, machine component 12 may include one or more electrically controlled components, power train components, electronically controlled components, hydraulically controlled components, suspension components, and any other such device known in the art.

Input device 24, as illustrated in Fig. 1 may be a steering wheel, a joystick, or any other device that may serve as an interface between the operator and machine component 12. Machine component 12 may respond directly or indirectly to a command given by the operator to input device 24. For example, machine component 12 may raise, lower, tilt etc. in direct response to movements of input device 24 (e.g., a joystick). Alternatively, machine component 12 may respond indirectly to input device 24. For example, in a situation where machine component 12 includes a suspension component or other similar device, machine component 12 may respond indirectly to input device 24 by reacting to motions caused by operation of input device 24.

The machine 10 may further be provided with a surveying system 26. The surveying system 26 may be connected directly or indirectly with the controller 22. The surveying system 26 may be any suitable system for detecting geographical features near the machine 10 such for example a radar system or an optical system. The optical system may be operating in that part of the spectrum that is visible to the human eye, but it may also operate at any other suitable frequency including infrared. The surveying system 26 may be capable of detecting obstacles on the path of travel such as rocks, potholes, trees or other vehicles, and it may also be able to detect any other surface, area or environmental characteristics such as roughness of the path of travel ahead, the type and consistency of the travel surface, work material and surface elevations or undulations.

The machine 10 may be provided with a speed monitoring system 27 for monitoring the machine speed. The speed monitoring system 27 may be any suitable system such as a radar system or a revolution counter measuring for example the revolutions per minute of a crankshaft or output shaft.

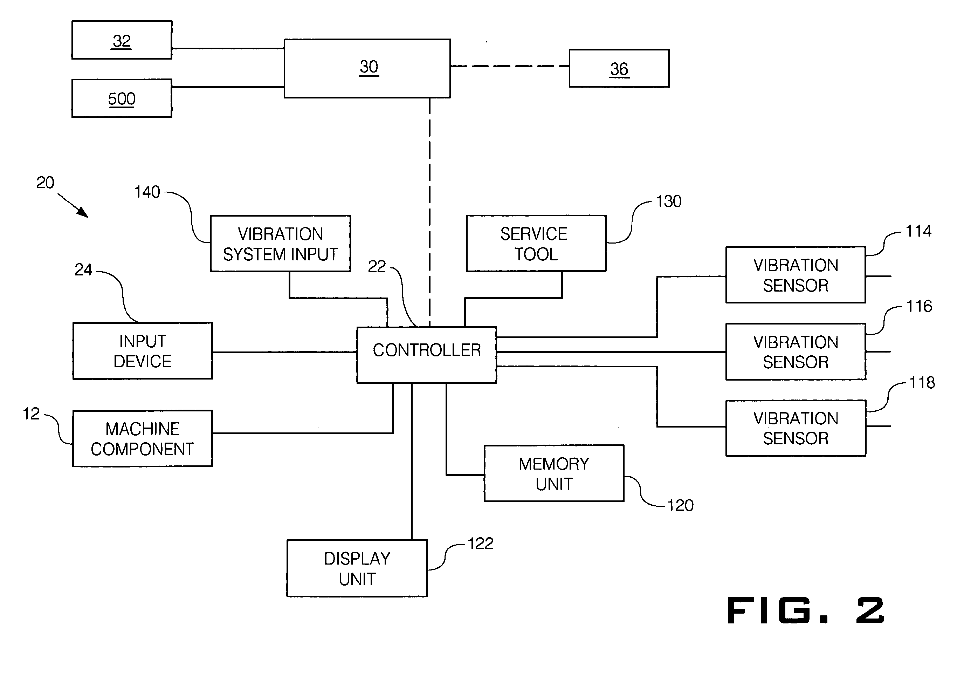

The machine 10 may be provided with a positioning system 28 such that the geographical location of the machine 10 is known. The positioning system 28 may be a system such as a Global Positioning System (GPS) or a variant thereof, but it may also be a system such as a local positioning system, with one or more reference points, for example a base station 30 (Fig. 2) remote of the machine 10. The positioning system 28 may also be linked to, or form a part of, the surveying system 26, whereby the surveying system determines the location of the machine 10 by recognizing particular geographical features near the machine 10.

The machine 10 may also be provided with communication means 34 for exchanging information with for example the base station 30 or another vehicle 36 (Fig. 2).

The base station 30 may be located at a site management station 32. The base station 30 may have a plurality of functions such as providing a reference point for the positioning system 28, being a central database for storing fleet, individual machine, site and operator data and providing general site monitoring facilities. It may also have, or be operatively connected to, control facilities allowing remote access to the machine 10.

Fig. 2 provides a block diagram representation of a vibration management system 20 according to an exemplary disclosed embodiment. Vibration management system 20 may include controller 22, at least one machine component 12, one or more vibration sensors 114, 116 and 118, input device 24, and a memory unit 120. Vibration management system 20 may also include a display unit 122, a service tool 130 and a vibration system input 140 for providing a vibration characteristic 21 to the controller 22.

As illustrated in Fig. 2, vibration management system 20 may include one or more vibration sensors. While the exemplary system shown in Fig. 2 includes three sensors: sensor 114, sensor 116 and sensor 118; vibration management system 20 may include any number of vibration sensors. The number of vibration sensors used in vibration management system 20 may range from one to any desired number for meeting the objectives of a particular application. Each vibration sensor may be placed in any desired location on machine 10 and may be configured to sense the vibrations experienced by the machine 10, any component of the machine 10, or the operator of machine 10. For ease of reference, the machine 10, any component of the machine 10, or the operator of machine 10 will from now be referred to as the machine member 11 where appropriate. Each vibration sensor may be configured to sense the vibrations experienced by the machine member 11 on an independent axis of motion. For example, sensors 114, 116 and 118 may be configured to sense vibrations in pitch, roll and yaw directions, respectively. Each sensor may provide a vibration characteristic 21 to controller 22 indicative of a sensed vibration level. Hydraulic, electromechanical, piezoelectric, or any other sensors known in the art may be used in vibration management system 20.

Controller 22 may include any devices suitable for running a software application. For example, controller 22 may include a CPU, RAM, I/O modules etc. In one embodiment, controller 22 may constitute a unit dedicated for adjusting the response of the machine components of machine 10. Alternatively, however, controller 22 may be integrated with and/or correspond to an electronic control unit (ECU) of machine 10.

Controller 22 may be configured to monitor the output signals from at least one of vibration sensors 114, 116 and 118. The data from these signals representing the vibration characteristic 21 may be stored in memory unit 120. Based on the vibration information provided by sensors 114, 116 and 118, controller 22 may determine an average vibration level experienced by the machine member 11. The average vibration level may be determined by sampling vibration level outputs from at least one of vibration sensors 114, 116, and 118 and storing the outputs in memory unit 120. An average vibration level may be calculated in any suitable manner, such as for example as an average of multiple sensors, over time or over amplitude or as a combination. In one embodiment the average vibration level is calculated using ISO 2631 human frequency weighted vibration levels and the root mean square method. The human frequency weighted vibration levels may vary between different standards. One such standard is the European Union Physical Agents Directive (EU-PAD), and in accordance with that Directive the levels are multiplied by 1.4 for fore/aft and side-to-side directions. There is continuous updating of data and the average value may be determined by including the new data and calculating an average over some or all of the sample times.

Controller 22 may be configured to determine the average vibration level during various stages of operation of machine 10. For example, the calculation may begin when use of machine 10 is commencing. Controller 22 may continuously or intermittently calculate the average value during a period of time in which the machine 10 is being used. Optionally, a time delay may be imposed such that the calculation of the average vibration level from any of sensors 114, 116, and 118 may begin only after waiting for a predetermined period of time. Controller 22 may reset the average vibration level calculation for one or more sensors 114, 116 and 118 when a period of use of machine 10 is started.

Alternatively or additionally, controller 22 may be configured to determine a rate of change of the average vibration level. This rate of change may be determined by storing a series of calculated average vibration level values and determining the slope of a curve through these values. The slope determination can be made for the current time or for any time in the past during which vibration management system 20 was operational.

Controller 22 may also be configured to monitor the vibration levels on more than one axis. For example, as shown in Fig. 2, controller 22 may monitor the vibrations from three sensors --114, 116 and 118, wherein each sensor senses vibrations on different independent axes. Controller 22 may therefore be configured to calculate the average vibration level for each of a plurality of predetermined axes of motion.

Controller 22 may also be configured to monitor the input commands given to input device 24. For example, when an operator moves input device 24 (e.g., a joystick) to lift machine component 12 (e.g., blade), controller 22 can monitor the motion of input device 24. Controller 22 may calculate a predicted response (or movement) of machine component 12 resulting from the motion of input device 24. This predicted response may be calculated with the help of data stored in memory unit 120, for example, that correlates the response of machine component 12 to a given input command from the operator. Once the operator moves input device 24, controller 22 may determine the magnitude and direction of that motion and may predict the response of machine component 12. The predicted response may be in the form of motion velocity and direction data for one or more portions of machine component 12. Controller 22 may also be configured to predict a response of elements other than machine component 12. For example, based on operator commands to any appropriate input device, controller 22 may predict a response of such components such as power source 14, various drive train/power train components (not shown). While the following description describes the operation of vibration management system 20 with respect to only machine component 12, it should be noted that the same or similar operations may be performed with any appropriate components/systems (e.g. power train/drive train components, etc.) on machine 10.

Controller 22 may be further configured to determine a predicted vibration effect on the machine member 11 based on the predicted response of machine component 12. The predicted vibration effect may be determined, for example, based on predetermined physical attribute information for machine component 12. For example, certain physical attribute information of machine component 12, such as mass, moments of inertia, motion limits, motion profiles (e.g., whether hard/soft stops exist, etc.), and vibration/motion profiles etc. may be stored in memory unit 120. Using the predicted response of machine component 12 and its physical attributes, controller 22 may now calculate the various forces generated by machine component 12 when it moves in response to the operator's input to input device 24. Based on the calculated forces, controller 22 may predict a resulting vibration profile experienced by the machine member 11 as a result of the impending motion of machine component 12. This calculated vibration profile may be summed with any other known sources of vibration (e.g., as determined by accessing predetermined motion/vibration profiles for machine component 12) to provide a total predicted vibration effect on the machine member 11.

Based on this predicted vibration effect, controller 22 may be configured to adjust the actual response of the machine component 12 if the predicted vibration effect would cause the average vibration level (e.g., for one or more axes of motion) to exceed a predetermined threshold value. Controller 22 may also be configured to adjust the actual response of machine component 12 based on the calculated rate of change of the average vibration level. For example, if the current rate of change would result in the threshold value being exceeded during the operator's scheduled operating time, then the actual response of machine component 12 may be adjusted. Additionally, a combination of the average vibration level and the rate of change of the average vibration level may be used when determining whether to adjust the actual response of a component. For example, in situations where the actual response may cause the average vibration level to momentarily exceed the threshold value, an adjustment to the actual response may be avoided or lessened if the rate of change of the average vibration level is trending downwards or has remained constant for a predetermined length of time. The actual response of the machine component 12 includes any or all motions and/or operations of machine component 12 in direct or indirect response to an operator's input to input device 24. The actual response of machine component 12 may be adjusted to reduce the resulting vibration effects on the machine member 11.

In one embodiment, controller 22 may adjust the actual response of machine component 12 by varying actuation control signals provided to machine component 12. Rather than issuing or allowing the normal control signals in response to a movement of input device 24, controller 22 may alter at least a portion of the control signals to reduce the vibration effects of machine component 12 on the machine member 11. For example, rather than allowing a full acceleration level of machine component 12 requested by the operator, controller 22 may condition the control signals to accelerate or decelerate machine component 12 at a slower rate to reduce the effects of these motions on the machine member 11. Other adjustments to the actual response may be applied depending on the needs of a particular application. Adjusting the actual response of machine component 12 in this manner may help to maintain the average vibration level experienced by the machine member 11 on any or all axes of motion below a predetermined threshold value.

In addition to adjusting control signals to systems or components that respond directly to an input to input device 24 (e.g., a blade or other work implement), controller 22 may also be configured to provide certain control signals to system that indirectly respond to the operator's inputs. For example, in certain situations, the vibration effects of the motion or operation of machine component 12 may be mitigated by providing control signals to one or more other systems. In certain embodiments, these other systems may include suspension systems. Actuating these systems or components of these systems can have the effect of at least partially offsetting the vibration producing motions of machine component 12.

In addition, controller 22 may be configured to adjust the actual response of machine component 12 based on at least one of a predetermined machine member 11 vibration threshold level and a predetermined machine member 11 time usage limit. The controller may be configured to record the time the machine 10 commences operation. As the machine member 11 approaches a predetermined time usage limit, the controller may adjust the response of machine component 12 such that the average vibration level experienced by the machine member 11 does not exceed the machine member 11 vibration threshold level for the predetermined time usage limit.

Controller 22 may be configured to receive geographical data and machine location data from either from the on-board surveying system 26 and the on-board positioning system 28 or it may receive such data from the base station 30. It may also provide data from the surveying system 26 and the positioning system 28 to the base station such that the data at the base station 30 may be updated.

Controller 22 may also be configured to compile machine usage statistics for the machine member 11 and further base the adjustment to the actual response of the machine component 12 on the compiled machine usage statistics for the machine member 11. This may for example be achieved by storing a usage history of machine member 11 in memory unit 120. This data may include information relating to the use of the machine member 11. In certain embodiments, the data may include the amount of time spent by the operator (object) on machine 10 for one or more operation sessions prior to the current use, the average vibration levels experienced by the operator (object) during prior operation sessions, the machine components used by the operator (object) during prior use, and any other appropriate information.

When in a later session, the operator inputs a command to input device 24, controller 22 may analyze the operator's past usage history and adjust the response of machine component 12 based at least partially on this history. For example, when an operator inputs a command to input device 24, controller 22 may determine that the predicted vibration effect may cause his average vibration level to exceed a predetermined threshold value. However, before controller 22 adjusts the actual response of machine component 12, it may analyze the operator's past usage history. If controller 22 determines from the operator's past usage history that the operator normally uses machine 10 in a manner that does not cause him to exceed the vibration threshold value, then controller 22 may choose to allow the actual response to occur with little or no adjustment. On the other hand, if the operator's past usage history shows that he frequently causes high vibration levels (especially within a short period of time), then controller 22 may adjust the actual response of machine component 12 more aggressively.

The controller 22 may be able to predict a level of vibration to which the machine member 11 will be exposed to based on data the controller 22 receives from at least one of the surveying system 26, the speed monitoring system 27, and the positioning system 28. For example, the surveying system may signal a rough terrain ahead whilst the speed monitoring system 27 indicates the machine 10 is traveling at high speed. The controller may determine that a combination of rough terrain and high speed may lead to high levels of vibration. In a similar manner the controller 22 may receive a signal from the positioning system 28 and based on data from past experience which may be stored in for example memory unit 20 or base station 30 it may determine a vibration characteristic related to the path of travel the machine 10 is currently at that time.

In one embodiment the controller 22 is configured to prevent exposure of the machine member 11 to vibration over a certain time interval such that a desired level for that particular time interval will not be exceeded. The overall length of the time interval may be fixed, for example as a regular working shift of 8 hours, but the composition may change continuously to reflect the ratio of time period worked and the time period still to be worked. The controller 22 therefore utilizes data relating to a first period of time that time interval in which the machine member 11 has already been exposed to vibration. This data may be obtained by referencing a vibration history 38 of the machine member 11. The vibration history 38 may be a long term history such as for example a year, a month or a week or may cover a shorter interval such as a day or a working shift. The vibration history 38 may include a variety of data relating to the vibration exposure of a particular machine member 11. It may include data indicative of an accumulative vibration exposure, such as for example the total amount of vibration or average vibration the machine member 11 has been exposed to during a first period of time such as a part of the operator's current working shift. It may therefore be a rolling figure, and may be updated on a regular basis. The vibration history 38 of the operator may also be indicative of the vibration exposure of the operator in relation to a variety of machinery. For example the operator may have firstly been operating a first machine such as an excavator wherein the operator has been exposed to certain levels and durations of low frequency vibration. The operator may secondly have been operating a different type of machine such as a skid steer loader and have been exposed for a certain time to a certain level of high frequency vibration. The operator vibration history 38 may also include data relating to different types or intensity of vibration experienced by the operator during different operations performed on same or similar machines. For example, high speed travel may give a different vibration characteristic 21 than for example a digging operation. The operator vibration history may reflect that by storing the vibration characteristic 21 broken down by the type of vehicle or the type of operation performed.

The vibration history 38 may also include data indicative of machine control behavior 40 of the operator. The machine control behaviour of the operator may be indicative of how aggressive an operator controls a type of machinery. In one embodiment the machine control behaviour includes monitoring an operator input to, for example, operate machine component 12. The operator may provide a command via the input device 24 which in this embodiment may be a joystick. The input device 24 may control the lift and lower of the machine component 12 via opening and closing a proportional control valve 42. A rapid movement of the input device 24 by the operator may result in a rapid movement of the proportional control valve 42 thereby inducing fast movement of the machine component 12, e.g. blade. The controller 22 may monitor this behaviour whilst monitoring any resulting vibration via any of the vibration sensors 114, 116, and 118 and produce data indicative of the machine control behaviour of that particular operator in relation to that particular type of machine or a type of operation.

To identify the operator and to access the associated individual operator vibration history 38, any suitable identifying means may be used such as a key code entered by the operator upon entering machine 10. Alternatively, controller 22 may use the operator's RFID tag or a portable identification device such as a swipe or chip card.

The machine member 11 vibration history 38 may be stored at any suitable location or in any suitable manner. In one embodiment the operator vibration history is stored on the portable identification device, whilst in another embodiment the data is stored in memory unit 120 or on the base station 30.

The controller 22 also needs data relating to a second period of time in the time interval in which the machine member 11 is still to be exposed to vibration. The controller 22 therefore utilizes data to predict the amount of vibration the machine member 11 will be exposed to for the remainder of the time interval. The controller 22 may therefore receive a vibration characteristic such as data from the machine member 11 vibration history 38 indicating the amount of vibration that may be expected as a function of the type of machinery that is being operated, the type of operation that is being performed, the machine control behaviour of the operator or data generated during past events in relation to a particular machine location. Alternatively the vibration characteristic may be a stored or estimated characteristic based on vibration, geographical, location or speed data from the any of the sensors 114, 116, 118, the surveying system 26, the positioning system 28 or the speed monitoring system 29. The stored data may be manually inputted data via for example vibration system input 140 or it may be data received from another machine or a fleet of machines and it may be continuously updated. The vibration characteristic 21 is preferably one or more values relating to current or future events, and is indicative of the amount of vibration the operator machine member 11 is or may be exposed to. The controller 22 may be configured to estimate the amount of vibration the machine member 11 will be exposed to during the second period of time and to combine this with the vibration exposure data relating to the first period of time. By combining the two sets of data the controller may predict a first accumulative vibration exposure characteristic which may then be compared to a desired characteristic. The desired characteristic may be a value representing an acceptable or legal exposure limit. The controller 22 may determine that the predicted first accumulative vibration exposure characteristic deviates from the desired characteristic in at least two ways. The controller 22 may determine that the predicted first accumulative vibration exposure characteristic falls below the desired characteristic indicating that the machine member 11 is not at risk of being overexposed to vibration over the time interval and that productivity could be increased. Alternatively, the controller 22 may determine that the predicted first accumulative vibration exposure characteristic will exceed the desired characteristic, indicating that the machine member 11 is at risk of being overexposed to vibration over the time interval and that productivity may have to be reduced.

Either way the controller 22 may perform an adjusting action in response to determining a deviation such that a predicted second accumulative vibration exposure characteristic which is to be calculated after the adjusting action moves toward the desired characteristic. This process of predicting an accumulative vibration exposure characteristic and performing an adjusting action in response to a deviation may be repeated as often as desired so as to reduce the deviation to a minimum.

The adjusting action may be any or a combination of action that may influence the amount of vibration created during an operation. The controller 22 may reduce or increase the machine speed or reduce or increase an output such as a signal for operating the machine component 12 such that the machine component 12 works at a reduced or increased speed. Furthermore, the controller 22 may perform an adjusting action in the form of a warning signal to the operator or the base station 30. The warning signal may indicate that there is a risk of overexposure to vibrations or that a the operator should induce a speed change, change the machine control behaviour or select a different path of travel. Alternatively the controller 22 itself may change the direction of travel to avoid for example rough terrain or an obstacle. The controller 22 may even indicate that the machine member 11 should be replaced with a different machine member 11 or that the machine member 11 should change over to a machine with a different vibration characteristic.

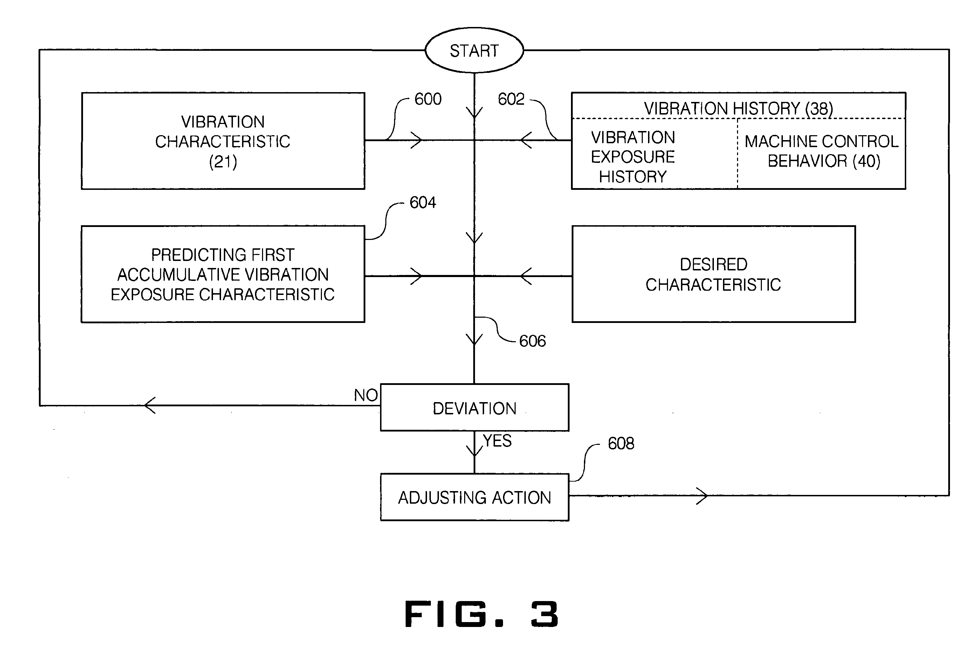

Fig. 3 provides a flow chart of the exemplary method for managing vibration exposure as described above. At the start of a cycle, a vibration characteristic and history data of the machine member 11 is fed to the controller 22 in steps 600 and 602. The controller 22 combines those inputs to predict a first accumulative vibration exposure characteristic in step 604. The predicted first accumulative vibration exposure characteristic is compared to the desired characteristic in step 606. If a deviation is detected the controller may decide an adjusting action is required at step 608 in response to the deviation. Once the adjusting action has taken place, the process loops back to the starting point so as to create a next predicted accumulative vibration exposure characteristic. If no deviation is detected at step 606, the process may loop back to the starting point without an adjusting action taking place.

Additionally, the operation of vibration management system 20 may be optional. Specifically, the vibration management system 20 may operate in an enabled mode in which controller 22 is allowed to adjust the actual responses of various machine components. Vibration management system may also be disabled such that controller 22 is prevented from making adjustments to the actual responses of the various components.

Operational modes may be important, for example, if machine 10 is operated in a semi-autonomous mode. In a semi-autonomous mode of operation, an operator may not be present on the machine. Instead, the machine may be controlled remotely by an operator at a base station. Thus, without an operator present, there may be no need to operate vibration management system 20 based on operator data. Nevertheless, vibration management system 20 may be enabled, for example, to protect any other machine member 11, when machine 10 includes a vibration sensitive component or when machine 10 receives a vibration sensitive payload.

An owner of machine 10 may set the values of one or more parameters associated with vibration management system 20 using, for example, service tool 130 (Fig. 2). Service tool 130 may be a portable device configured to interface with machine 10 (e.g., a laptop). For example, the owner may select and input a predetermined vibration threshold limit and/or a predetermined time threshold limit. The predetermined vibration threshold limit may correspond to the maximum vibration threshold level that a machine member 11 may be exposed to over a certain period of time. This limit may be prescribed by regulatory bodies or may be determined by the operator. Alternatively, the owner of the machine may also use vibration system input 140 to set the vibration threshold limit and/or time threshold limit. In such an embodiment, an authorization code may be required to set these values using input 140, which is normally available to the operator as well. However, the use of an authorization code can minimize the possibility of the operator overriding the information provided by the owner of machine 10. Upon beginning a session on the machine, the operator may use vibration system input 140 to set a predetermined time limit that lies within the threshold set by the owner of machine 10.

Display unit 122 may be configured to display to the operator information related to the operation of vibration management system 20. For example, display unit 122 may be configured to display an average vibration level determined based on one, some, or all of the vibration sensors on machine 10. Also, display unit 122 may show an actual response adjustment status indicator to convey to the operator when an actual adjustment has occurred along with the degree of the adjustment. Display unit 122 may include a CRT unit, a flat panel display unit, one or more indicator lights, or any other display devices known in the art.

Alternatively or in addition, display unit 122 may also be remotely located with respect to machine 10. For example, when machine 10 is used in a semi-autonomous mode, display unit 122 may be located at the site management station 32. Machine 10 may include any suitable technology for enabling communications between controller 22 and display unit 122 located at the base station 30.

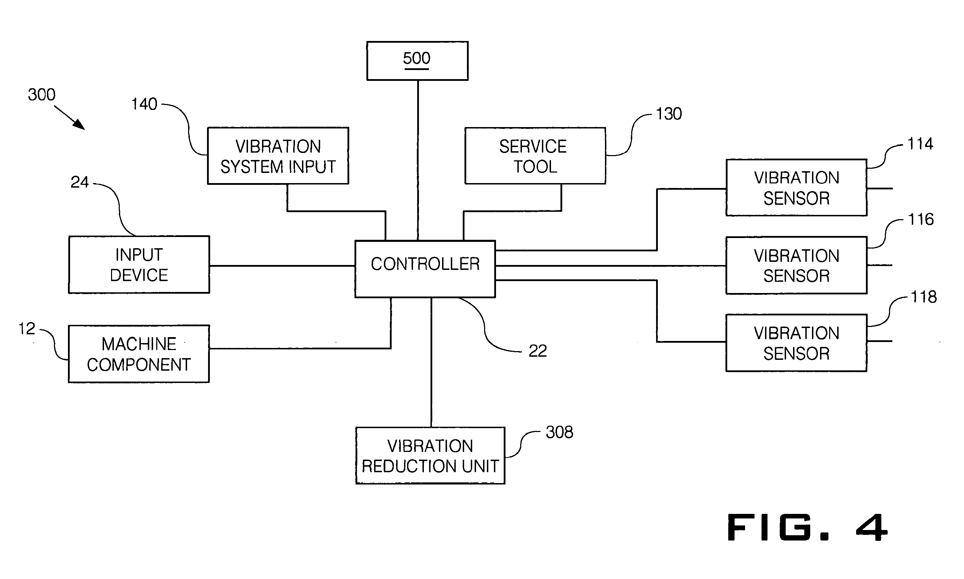

Fig. 4 provides a block diagram illustrating another exemplary vibration management system 300 consistent with the present disclosure. Vibration management system 300 may include all of the same components as vibration management system 20, as shown in Fig. 2. Additionally, vibration management 300 may include a vibration reduction unit 308.

Vibration reduction unit 308, as shown in Fig. 4, may include any device that may be operated actively to reduce vibrations. For example, vibration reduction unit 308 may include one or more of an active suspension component of machine 10, a stabilized operator platform, a stabilized operator seat, or any other actively controlled device. Vibration reduction unit 308 may be equipped with components that can respond to a controller signal. For example, vibration reduction unit 308 may include one or more motors that may cancel or reduce vibrations experienced by the machine member 11 of machine 10 in response to signals from controller 22. When controller 22 determines that the predicted vibration effect will cause the average vibration level experienced by the machine member 11 of machine 10 to exceed a predetermined vibration threshold, controller 22 may send actuation control signals to vibration reduction unit 308. Vibration reduction unit 308 may respond to these signals by moving or actuating one or more components to at least partially counteract the predicted vibration effect on the machine member 11.

The disclosed active vibration management system 300 may be used alone or in conjunction with one or more other vibration management systems (e.g., vibration management system 20). Active vibration management system 300 may serve to counteract the predicted vibration effect of machine component 12 in response to an operator's command to input device 24 on machine 10. If used in conjunction with another vibration management system, vibration management system 300 may be configured to compensate for residual vibration remaining after the action of the other vibration management system.

The vibration management system 20, 300 may be part of a site management system 500. The site management system 500 may have a central base such as the base station 30. The base station 30 may be in communication with the machine 10, and may also be in communication with other machinery operating on site. The base station 30 may monitor the exact location of all machines and vehicles either by receiving data from the machines themselves or via any other suitable means capable of monitoring the machines such as closed circuit television systems or the like. In one embodiment the site management system 500 is configured to monitor the exposure of the machine member 11 to vibration. The site management system 500 may retrieve data from the controller 22, but may also reference the operator vibration history or other stored data of the machine member 11 separately from the controller. Based on the various sources of data, the site management system 500 may compile a resource plan for the available the machine member 11 base. For example, the site management system 500 may determine that an operator is engaged in an activity causing exposure to vibration levels that would cause the operator to be overexposed during a full working shift and may take an adjusting action in response. The site management system 500 may therefore signal an alert and recommend that the machine output is reduced or it may actively reducing the output or otherwise interfere with the machine 10. Alternatively it may recommend that the operator is transferred to an operation that is likely to expose the operator to lower levels of vibration. Two operators may swap machines for example. When it appears that an operator will fall well below the desired exposure characteristic, the site management system may allow an increase in machine aggressiveness or output to increase productivity or the operator may be transferred to an operation where the operator is likely to incur higher levels of vibration so as to strike a balance between high productivity and acceptable exposure to vibration.

### Industrial Applicability

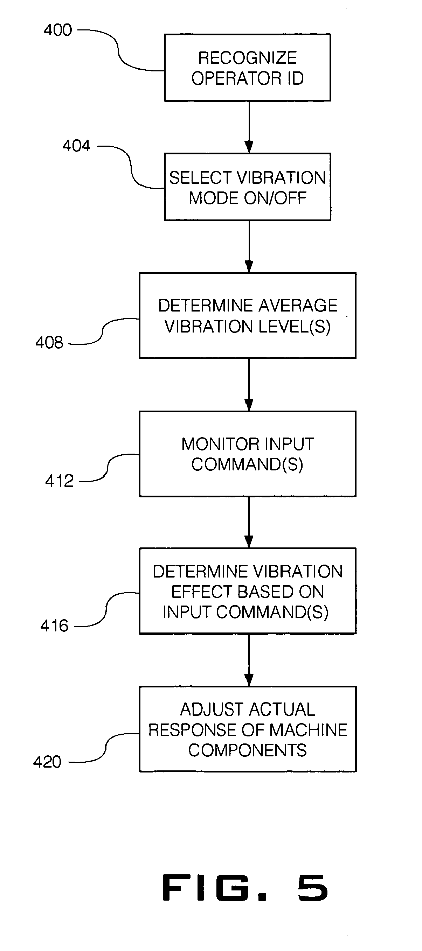

Fig. 5 provides a flow chart illustrating the steps of an exemplary disclosed vibration management method. At step 400, controller 22 may determine the identity of the operator operating the machine. The operator's identity may be determined by the key code entered by the operator upon entering machine 10. Alternatively, controller 22 may use the operator's RFID tag, or other appropriate means to determine his identity, for example a portable identification device such as a swipe or chip card. At step 404, the work mode of machine 10 may be set. Vibration management system may be enabled (vibration mode on) or disabled (vibration mode off). If enabled, then at step 408, controller 22 may determine the average vibration level to which the machine member 11 of the machine 10 has been exposed. At step 412, controller 22 may monitor input commands from the operator to input device 24. At step 416, controller 22 may determine a vibration effect as a result of a predicted response of at least one machine component 12 to at least one of the input commands. At step 420, controller 22 may adjust an actual response of the at least one machine component 12 based on the determined vibration effect and the average vibration level.

The disclosed vibration management system 20 may be used on any system where a machine member 11 is exposed to vibrations. By calculating the average vibration level experienced by a the machine member 11 and using this information to proactively reduce the vibration effect experienced by the machine member 11, vibration management system 20 may prolong the period of time the machine member 11 may remain in operation or on machine 10. In addition, by adjusting the response of machine component 12 on the basis of the usage history of each individual machine member 11, vibration management system 20 may tailor the operation of machine 10 for each machine member 11.

The disclosed vibration management system 20 has many potential benefits. The vibration management system 20 may proactively adjust the response of machine component 12 so that the exposure of a machine member 11 to vibration may be controlled. By proactively adjusting the response of machine component 12, vibration management system 20 may for example maximize an operator's time on machine 10. In addition, the system may obviate the need for the owner of machine 10 to periodically check the vibration level experienced by an operator of machine 10. Furthermore, the owner of machine 10 may periodically vary the vibration and time thresholds on machine 10 to conform with any changes in regulations. This may be done without any mechanical or structural changes to machine 10.

In addition, the site management system 500 may enable a more efficient resource management by monitoring and predicting accumulative vibration levels that operators have been exposed to and taking adjusting action or allocating resources in response to deviations between predicted levels and desired levels of vibration exposure.

It will be apparent to those skilled in the art that various modifications and variations can be made in the disclosed vibration management system without departing from the scope of the disclosure. Additionally, other embodiments of the disclosed system will be apparent to those skilled in the art from consideration of the specification. It is intended that the specification and the examples be considered exemplary only, with a true scope of the disclosure being indicated by the following claims and their equivalents.

## Claims

1. A method of managing vibration exposure, the method comprising:
receiving at least one vibration characteristic relating to a machine member;
referencing a vibration history;
predicting a first vibration exposure characteristic relating to said machine member using at least said vibration history and said at least one vibration characteristic;
determining that said first predicted vibration exposure characteristic deviates from a desired characteristic; and
performing an adjusting action in response to said deviation such that a second predicted vibration exposure characteristic subsequent to said first vibration exposure characteristic moves toward said desired characteristic.

2. A method according to claim 1, wherein the step of predicting said vibration exposure characteristic includes the step of predicting an accumulative vibration exposure characteristic.

3. A method according to claim 1 wherein the step of referencing a vibration history includes the step of referencing an operator history.

4. A method according to claim 1 wherein the step of referencing a vibration history includes the step of referencing a machine history.

5. A method according to claim 1, wherein the step of receiving said vibration characteristic includes the step of receiving a signal indicative of a vibration level experienced by said machine member.

6. A method according to claim 5, wherein said vibration level is an average vibration level.

7. A method according to claim 1, further including the step of predicting said vibration characteristic.

8. A method according to claim 7, wherein predicting said vibration characteristic includes using data relating to at least one of geographical data, machine location data and vehicle speed data.

9. A method according to claim 1, wherein said vibration history includes at least one value indicative of an accumulated level of vibration experienced by said machine member over a first period of time.

10. A method according to claim 1, wherein said vibration history includes at least one value indicative of machine control behaviour of a machine operator.

11. A method according to claim 2, wherein said first vibration exposure characteristic includes at least one value indicative of an expected accumulated level of vibration experienced by said machine member.

12. A method according to claim 1, wherein said desired characteristic includes at least one value set to prevent said machine member from being exposed to vibration levels exceeding an acceptable limit.

13. A method according to claim 1, wherein said desired characteristic includes at least one value indicative of a balance between high productivity of said machine member and acceptable exposure of said machine member to vibration.

14. A method according to claim 1, wherein said adjusting action is at least one of a) a change in machine speed, b) a signal to said machine operator to perform a specific action, c) adjusting the output of said at least one component, d) a change in the direction of travel, e) a replacement of said machine operator with another machine operator, e) a replacement of said machine with another machine, or f) indicating that said machine operator is at risk of being exposed to a vibration level exceeding acceptable levels.

15. A method of managing vibration levels of at least one machine having a machine member and at least one adjustable component, said method comprising:
receiving a geographical dependent vibration characteristic;
referencing a vibration history;
predicting a first accumulative vibration exposure characteristic using at least said vibration history and said geographical dependent vibration characteristic;
determining that said first predicted accumulative vibration exposure characteristic deviates from a desired characteristic; and
adjusting said at least one machine component in response to said deviation such that a second predicted accumulative vibration exposure characteristic subsequent to said first accumulative vibration exposure characteristic approaches said desired characteristic.

16. A method according to claim 15, wherein the using of said geographical dependent vibration characteristic includes predicting a value based on a survey of a geographical terrain.

17. A method according to claim 15, wherein the step of predicting of a value based on a survey of a geographical terrain includes evaluating data corresponding to at least one of a) machine location, b) an obstacle ahead of said machine, or c) terrain roughness.

18. A method according to claim 15, wherein said vibration history includes at least one value indicative of an accumulated level of vibration experienced by said machine member over a first period of time.

19. A method according to claim 18, wherein said first accumulative vibration exposure characteristic includes at least one value indicative of an expected accumulated level of vibration experienced by said machine member over a second period of time.

20. A method of managing resources on a work site, said resources including at least one machine and at least one operator for said at least one machine, said method comprising:
receiving at least one vibration characteristic;
referencing a vibration history;
predicting a first accumulative vibration exposure characteristic using at least said vibration history and said at least one vibration characteristic;
determining that said first predicted accumulative vibration exposure characteristic deviates from a desired characteristic; and
allocating resources in response to said deviation.
